# EUROPEAN PATENT SPECIFICATION

(11) **EP 3 428 714 B1**
(45) Date of publication and mention of the grant of the patent: **12.10.2022**
(21) Application number: 18181944.2
(22) Date of filing: 05.07.2018
(51) Int. Cl.: G02C 5/22, G02C 5/10

(54) **HINGE FOR EYEGLASSES**
SCHARNIER FÜR BRILLEN
CHARNIÈRE POUR LUNETTES

(30) Priority: 11.07.2017 IT 201700077667; 13.02.2018 IT 201800002607
(43) Date of publication of application: 16.01.2019
(73) Proprietor: Silcon Plastic S.r.l., 32012 Val di Zoldo (BL) (IT)
(72) Inventor: COSTANTIN, Arcangelo, 32012 Val Di Zoldo BL (IT); BATTISTIN, Pietro, 32012 Val Di Zoldo, Frazione Dont BL (IT); COSTANTIN, Virgilio, 32012 Val Di Zoldo BL (IT)
(74) Representative: Modiano, Micaela Nadia

(56) References cited:
- EP-A1- 0 749 027
- EP-A1- 0 825 475
- WO-A1-2012/116418
- FR-A1- 2 938 350
- US-A- 3 572 914
- US-A1- 2008 284 975
- US-A1- 2015 337 584

## Description

The present invention relates to a hinge for eyeglasses.

In the eyewear sector, hinges are widespread for articulating the temples to the front, and comprise an element that protrudes from either the temple or the front to which the temple is hinged, and which is designed for coupling with a corresponding element that protrudes from the other one of either the temple or the front, and both have holes which are passed through axially by a same screw pin, at which the relative rotation occurs between the two.

Although widespread, such hinges are not capable of meeting some requirements that today are very much felt in the eyewear sector.

Known hinges are disclosed in EP0749027, US3572914 and WO2012/116418.

For example, usually in the configuration for use of the eyeglasses, in which the temple is rotated away from the front, at least the screw and at least a portion of the elements that are integral respectively with the front and with the temple can clearly be seen.

Therefore, in order to improve the appearance, it is necessary to conceal the hinge mechanism as much as possible.

Furthermore, nowadays it is often also required that the hinges give the user a sensation of stability, by ensuring a stable positioning of the temple in both configurations of the eyeglasses, which is something that does not happen with these hinges owing to the play with which the elements that protrude from the front and from the temple are coupled. This drawback is nowadays overcome with hinges that are especially made for this purpose, but which are structurally complex. For example such a type of hinge is made up of a first hinge element which comprises a small casing, a slider that can slide in the casing and one or more springs accommodated in the casing so as to elastically oppose the extension therefrom of the slider. The slider generally incorporates the male hinge part, which juts out externally from the casing, and the second hinge element incorporates the female hinge part, pivoted to the male hinge part. Furthermore a cam device is provided which defines two relative configurations of the hinge elements in which the springs support the minimum operating traction.

Such hinges reveal a complexity, and therefore a cost, both in terms of components and in terms of assembly, which can significantly influence the final cost of the eyeglasses.

The aim of the present invention is to provide a hinge for eyeglasses that is capable of improving the known art in one or more of the above mentioned aspects.

Within this aim, an object of the invention is to provide a hinge for eyeglasses that is completely invisible in the configuration for use of the eyeglasses and which enables a stable positioning of the temple, both in the configuration for use and in the closed configuration.

Another object of the invention is to increase the practicality and the comfort of use of the eyeglasses.

Another object of the invention is to provide a hinge that is made up of few parts.

A still further object of the present invention is to overcome the drawbacks of the known art in an alternative manner to any existing solutions.

Another object of the invention is to provide a hinge for eyeglasses that is highly reliable, easy to implement and low cost.

This aim and these and other objects which will become better apparent hereinafter are achieved by a hinge according to claim 1, optionally provided with one or more of the characteristics of the dependent claims.

Further characteristics and advantages of the invention will become better apparent from the description of four preferred, but not exclusive, embodiments of the hinge according to the invention, which are illustrated for the purposes of non-limiting example in the accompanying drawings wherein:

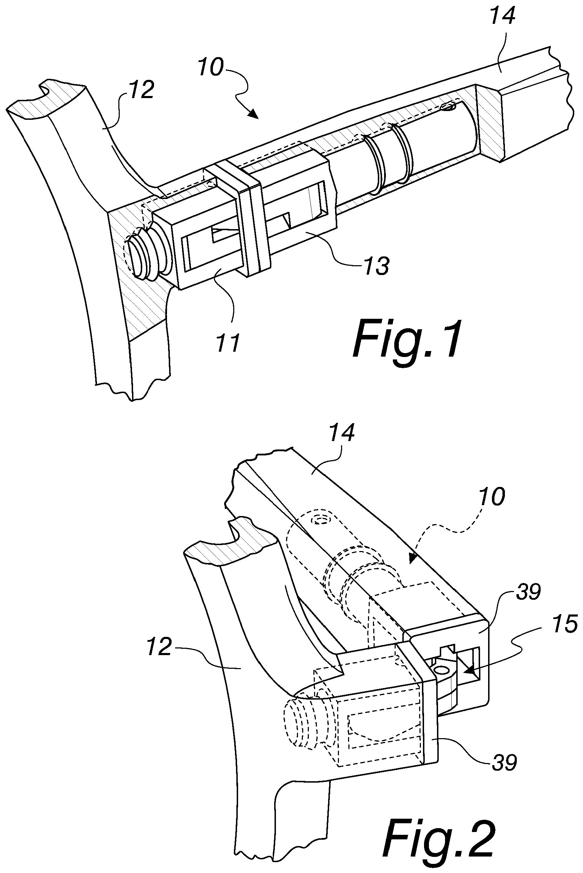

Figure 1 shows the hinge according to the invention installed in eyeglasses in the configuration for use;
Figure 2 shows the hinge according to the invention installed in eyeglasses in the closed configuration, with the temple close to the front;
Figure 3 is an exploded perspective view of the hinge installed in the eyeglasses in the closed configuration;
Figure 4 is an assembled view of some components of the exploded view of Figure 3;
Figure 5 is a cross-sectional view taken substantially on the horizontal plane of the hinge according to the invention, when the eyeglasses are in the configuration for use;
Figure 6 is a cross-sectional view taken substantially on the horizontal plane of the hinge according to the invention, when the eyeglasses are in the closed configuration;
Figure 7 is a cross-sectional view of the hinge taken on a plane perpendicular to the temple;
Figure 8 is a perspective view of the hinge in a second embodiment;
Figure 9 shows the internal components of the hinge, again in its second embodiment;
Figure 10 is a cross-sectional view of the hinge in a first variation of the second embodiment, when the eyeglasses are in the configuration for use;
Figure 11 shows the hinge of the previous figure, when the eyeglasses are in the closed configuration;
Figure 12 is a cross-sectional view of the hinge in a second variation of the second embodiment, when the eyeglasses are in the configuration for use;
Figure 13 shows the hinge of the previous figure, when the eyeglasses are in the closed configuration;
Figure 14 shows the internal components of the hinge in a third embodiment;
Figure 15 is a cross-sectional view of the hinge in the third embodiment, when the eyeglasses are in the configuration for use;
Figure 16 shows the hinge of the previous figure, when the eyeglasses are in the closed configuration;
Figure 17 is a cross-sectional view of the hinge in a variation of the first embodiment, when the eyeglasses are in the configuration for use;
Figure 18 is a perspective view of a variation of the hinge in the first embodiment when the eyeglasses are in the closed configuration;
Figure 19 is a side view of a fourth embodiment of the hinge.

With reference to the figures, the hinge according to the invention is generally designated by the reference numeral 10 in its first embodiment. It comprises a first pivoting portion 11, to be associated with an end part of a front 12 of eyeglasses, and a second pivoting portion 13, to be associated with an end part of a temple 14 of the same eyeglasses. The first and second portions 11, 13 are connected by way of a toggle mechanism 15, which is accommodated in these portions when the eyeglasses are in the configuration for use, with the temple 14 rotated away from the front 12.

The front 12 and the temple 14 can be made of metal or obtained by injection molding of plastic material, with cavities that are conveniently contoured to receive with interference respectively the first pivoting portion 11 and the second pivoting portion 13. In the second case, the first portion 11 and the second portion 13 conveniently have the respective leaves 39 with which they face each other in the configuration for use of the eyeglasses.

The two portions 11 and 13 are hollow in order to accommodate the components of the toggle mechanism 15.

In particular, such mechanism 15 comprises a first arm 16 and a second arm 17 which are angled in an intermediate region thereof and between the two pivoting portions 11 and 13, in which they are mutually pivoted about a pivot 18.

In particular, both have a knee with an angle greater than 90°.

The angle defines:
- for the first arm 16, a first front-side end portion 19, at the end of which the first arm is adapted to translate within the first pivoting portion 11, in the direction moving toward and away from the second pivoting portion 13, and a second temple-side end portion 20, with which the first arm is coupled so as to rotate in the second pivoting portion 13 about a first rotation pivot 21 which is integral with the second pivoting portion,
- for the second arm 17, a first temple-side end portion 22, comprising one or more tabs 35, at the end of which the second arm is adapted to translate within the second pivoting portion 13, in the direction moving toward and away from the first pivoting portion 11, and coupled to elastic return means 23, and a second front-side end portion 24, with which the second arm is coupled so as to rotate in the first pivoting portion 11 about a second rotation pivot 25 which is integral with the first pivoting portion.

A locking element 36 is also inserted into the second pivoting portion 13 and has: one end 37 which is free and contoured to be complementary to the tabs 35 and adapted to generate interference with such tabs in the configuration in which the temple is closed, and the other end 38 which is integral with a shank 31. In particular, the locking element 36 can be rendered integral with the shank 31 or be a tab thereof. The locking element 36 has an elasticity that is such as to make it capable of behaving like a flat spring when the temple is being closed, by interacting with the tabs 35.

The first arm 16 is adapted to rotate and translate with at least one protrusion 26 of its first front-side end portion 19 in a respective first translation guide channel 27 which is provided on the internal wall of the first pivoting portion 11.

Similarly the second arm 17 is adapted to rotate and translate with at least one protrusion 28 of its first temple-side end portion 22 in a respective second translation guide channel 29 which is provided on the internal wall of the second pivoting portion 13.

In particular, the first front-side end portion 19 of the first arm 16 and the first temple-side end portion 22 of the second arm 17 are passed through by a respective pin that protrudes from opposite sides of the same portion so as to create, for each one, two respective protrusions 26 and 28 with which they are designed to rotate and translate within respective opposite translation guide channels 27, 29.

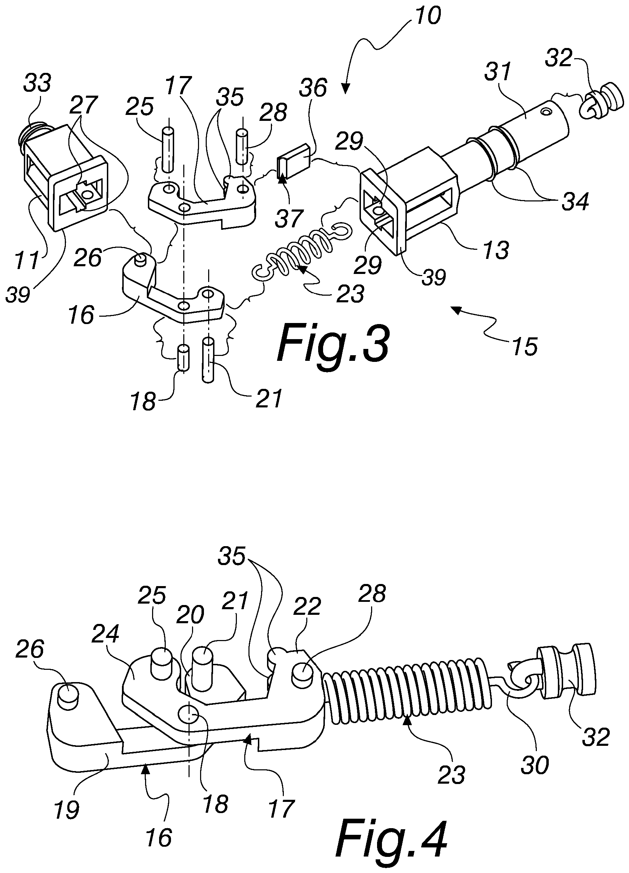

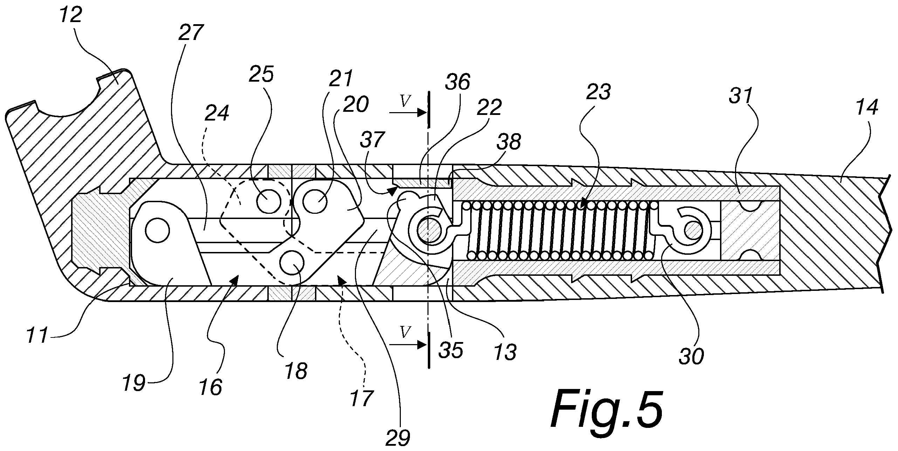

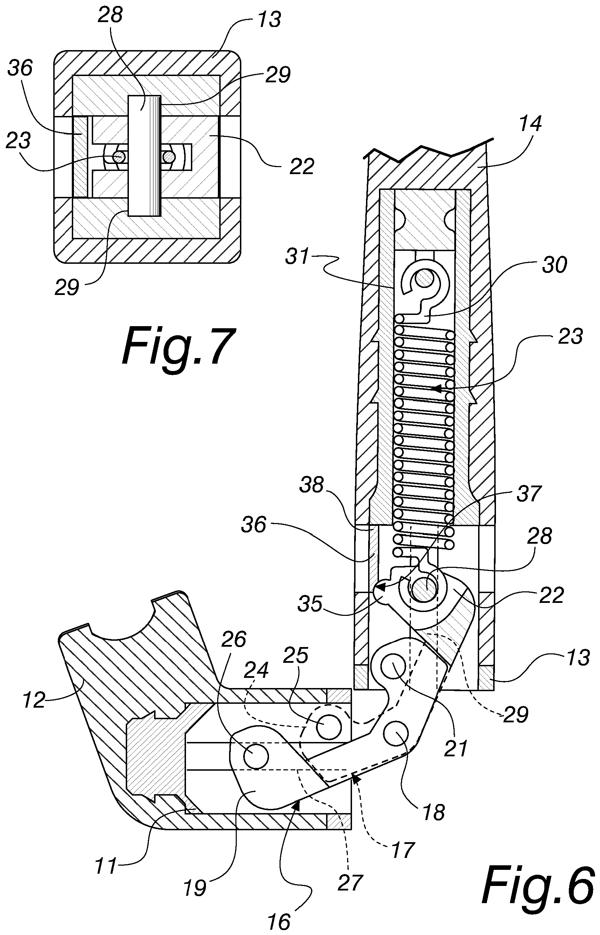

The elastic return means 23 comprise, as can clearly be seen in the exploded view in Figure 3 and in the cross-sectional views in Figure 4 and in Figure 5, a helical spring which is connected with one end to the first temple-side end portion 22 and with the opposite fixed end 30 to the temple 14 of the eyeglasses. This can also be seen in the cross-section view shown in Figure 6, which is a cross-section taken on the first temple-side end portion 22.

The spring is accommodated within a hollow shank 31 that extends the second pivoting portion 13 and is coupled therein with its fixed end 30. The hollow shank 31 is adapted to be inserted into a temple 14, expressly hollow, with the rest of the second pivoting portion 13.

In particular, in order to maintain the position of the spring and ensure its effect of elastic return of the second arm 17, it is coupled with the fixed end 30 to an affixing element 32 which is rendered integral with the hollow shank 31 by way of an affixing pin that passes through them both in a direction perpendicular to the direction of extension of the shank. Such affixing pin is not shown in order to simplify the drawings.

As can be seen in the exploded view in Figure 3, the first pivoting portion 11 is also provided with a shank 33, which in this case is not necessarily hollow. Both the first shank 31 and the shank 33 have circular protrusions 34 on their surface, which are adapted to create interference with the cavity respectively of the front 12 and of the temple 14 into which they are to be inserted, in order to prevent an accidental extraction of the hinge from the frame.

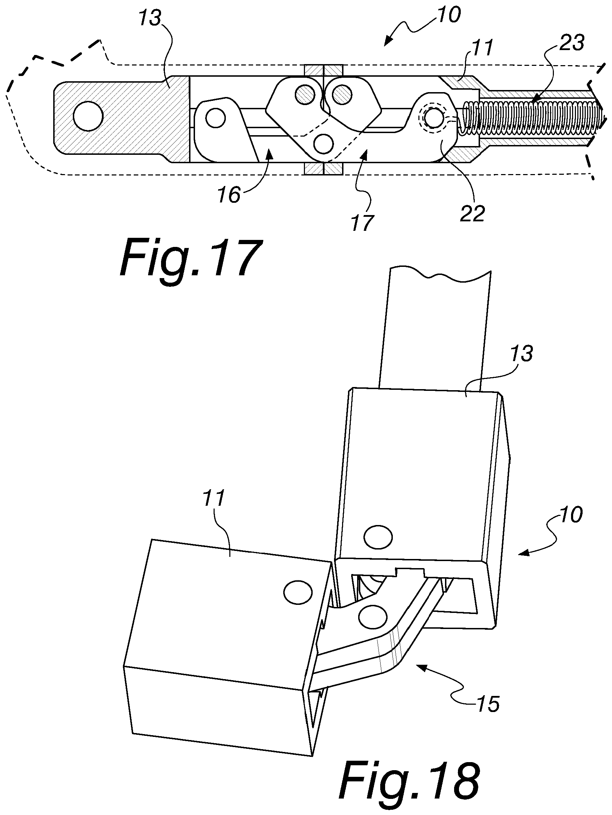

Figure 17 shows a variation of the first embodiment, in which there are no tabs and no locking element, and the helical spring 23, instead of being mounted extended, is mounted compressed, thus facilitating the maintenance of the closed configuration of the eyeglasses.

Figure 18 shows another variation of the first embodiment, in which the first pivoting portion 11 and the second pivoting portion 13 can be built completely into respectively the front 12 and the temple 14 (since they do not have the rim 39 shown in the first variation of this embodiment).

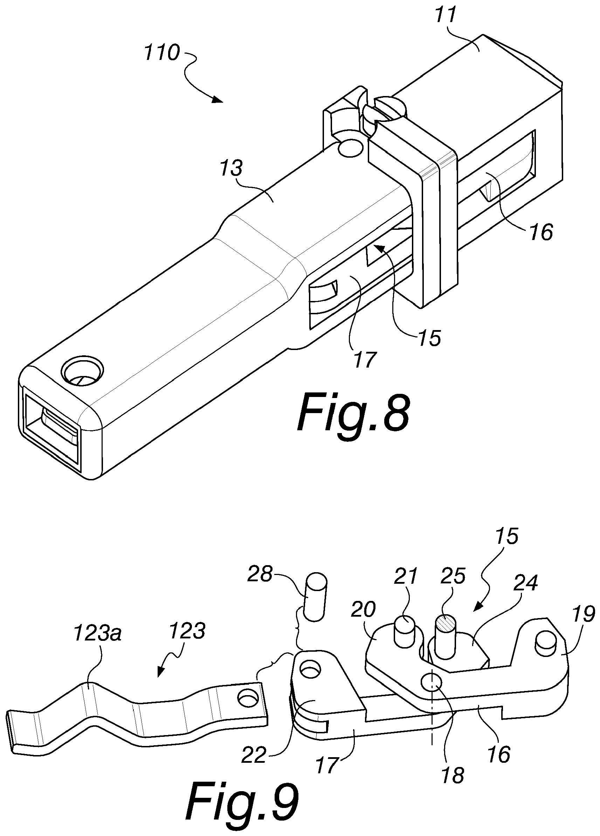

In its second embodiment, the hinge 110, illustrated in Figures 8 to 13, comprises, as in the previous embodiment, a first pivoting portion 11, to be associated with an end part of a front 12 of eyeglasses, and a second pivoting portion 13, to be associated with an end part of a temple 14 of the same eyeglasses. In this case too, the first and second portions 11, 13 are connected by way of a toggle mechanism 15.

Furthermore, the hinge 110 is provided with a leaf spring 123 adapted to act on the mechanism 15 for maintaining the stability of the eyeglasses at least in one of either the closed configuration, with the temple 14 close to the front 12, and the configuration for use, with the temple 14 rotated away from the front 12.

As in the first embodiment, the mechanism 15 comprises a first arm 16 and a second arm 17 which are angled in an intermediate region thereof and between the two pivoting portions 11 and 13, in which they are mutually pivoted about a pivot 18. The angle defines, for the first arm 16, a first front-side end portion 19, at the end of which the first arm is adapted to rotate and translate within the first pivoting portion 11, in the direction moving toward and away from the second pivoting portion 13, and a second temple-side end portion 20, with which the first arm is coupled so as to rotate in the second pivoting portion 13 about a first rotation pivot 21 which is integral with the second pivoting portion.

For the second arm 17, the angle defines a first temple-side end portion 22, at the end of which the second arm is adapted to rotate and translate within the second pivoting portion 13, in the direction moving toward and away from the first pivoting portion 11, and coupled to the leaf spring 123, and a second front-side end portion 24, with which the second arm is coupled so as to rotate in the first pivoting portion 11 about a second rotation pivot 25 which is integral with the first pivoting portion.

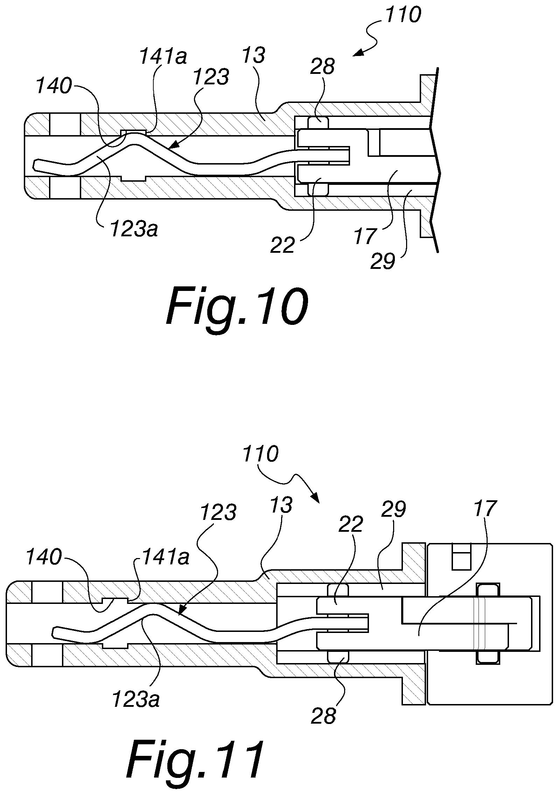

The first variation of such embodiment is shown in Figure 10, when the temple is in the configuration for use, and in Figure 11, when the temple is in the closed configuration. As illustrated, the leaf spring 123 is connected with one end to the first temple-side end portion 22 and has an undulation 123a (the spring consists of an undulating lamina) with the crest of which it is adapted to arrange itself in an adapted seat 140 that is present on the internal wall of the second pivoting portion 13, it being adapted to slide with the second arm 17 in the second pivoting portion 13, going past, with snap action, an abutment shoulder 141a of the seat 140.

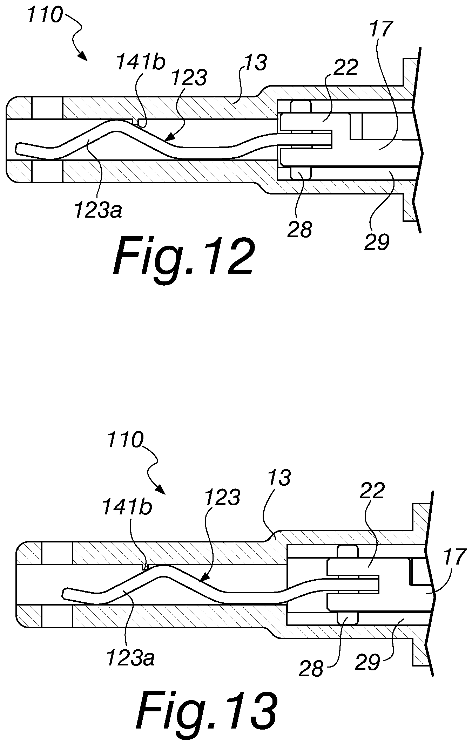

The second variation is illustrated in Figures 12 and 13, in the respective configurations of the temple. As illustrated, the leaf spring 123 is connected with one end to the first temple-side end portion 22 and has an undulation 123a (in this case too the spring consists of an undulating lamina) with the crest of which it is adapted to go past, with snap-action, a tooth 141b that is present on the internal wall of the second pivoting portion 13, it being adapted to slide with the second arm 17 in the second pivoting portion 13.

A pin 28 that passes through the first portion 22 determines the protrusion for the translation in the guide channel 29. In this case such pin also has the function of creating the connection between the second arm 17 and the spring.

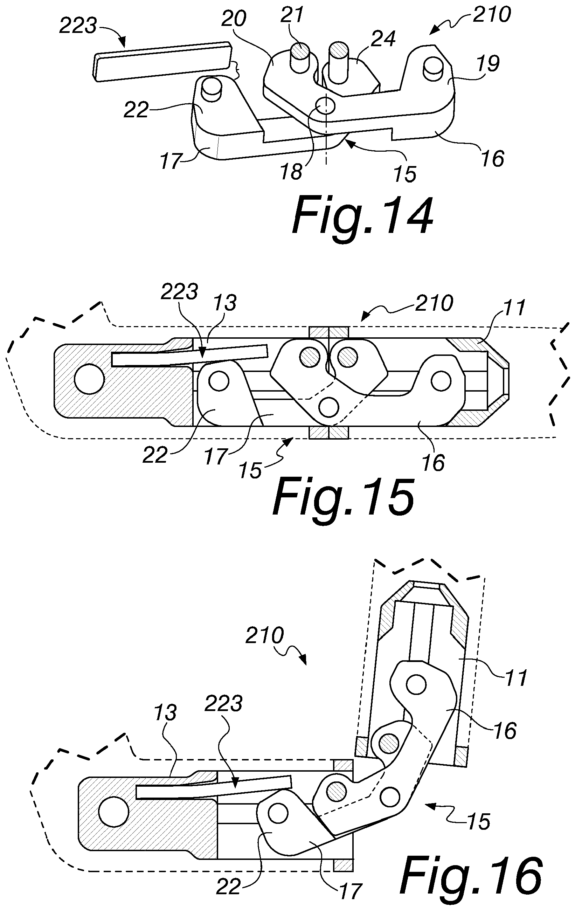

Figures 14 to 16 show the hinge 210 in its third embodiment.

As in the first embodiment, the toggle mechanism 15 comprises a first arm 16 and a second arm 17 which are angled in an intermediate region thereof and between the two pivoting portions 11 and 13, in which they are mutually pivoted about a pivot 18.

The angle again defines, for the first arm 16, a first front-side end portion 19, at the end of which the first arm is adapted to rotate and translate within the first pivoting portion 11, in the direction moving toward and away from the second pivoting portion 13, and a second temple-side end portion 20, with which the first arm is coupled so as to rotate in the second pivoting portion 13 about a first rotation pivot 21 which is integral with the second pivoting portion.

For the second arm 17, the angle defines a first temple-side end portion 22, which is cam-shaped, with which the second arm is adapted to rotate and translate within the second pivoting portion 13, in the direction moving toward and away from the first pivoting portion 11, with the cam bending the leaf spring 223, which is adapted to exert a compression in the direction transverse to the direction of translation of the second arm 17, and a second front-side end portion 24, with which the second arm is coupled so as to rotate in the first pivoting portion 11 about a second rotation pivot 25 which is integral with the first pivoting portion.

In particular, in this embodiment, the leaf spring 223 consists of an elastic leaf lamina, locked with one of its portions in an adapted seat defined in the portion 13 proper, from which it protrudes on the first temple-side end portion 22, which is cam-shaped and keeps it bent and therefore preloaded. Since it is preloaded, the spring 223 exerts a continuous compression. As can be seen in Figure 15 and in Figure 16, in the transition from the configuration for use to the closed configuration, the lamina 223 is further deformed and loaded by the cam of the first temple-side end portion 22.

In fact, as can be seen from Figure 15, the cam has a substantially flat part on which the lamina of the leaf spring 223 presses, thus determining a stable equilibrium of the temple when the eyeglasses are in use. As can be seen in Figure 16, beyond the flat part the cam has an angle with which it pushes on the lamina in the closed configuration, thus determining the additional bending.

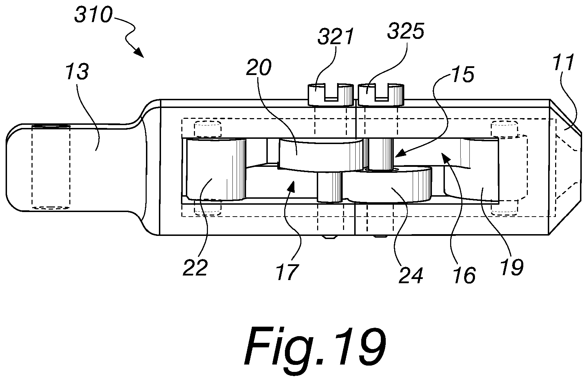

In a fourth embodiment, shown in Figure 19 and generally designated with the reference numeral 310, the hinge differs from the other embodiments described previously mainly in the lack of elastic elements.

As in the previous embodiments, it comprises a first pivoting portion 11, to be associated with an end part of a front of eyeglasses, and a second pivoting portion 13, to be associated with an end part of a temple of the same eyeglasses. The two portions 11 and 13 are connected by way of a toggle mechanism 15 which comprises a first arm 16 and a second arm 17 which are angled in an intermediate region thereof and between the two pivoting portions 11, 13, in which they are mutually pivoted about a pivot (not shown and similar to the pivot 18 in the previous embodiments).

The angle defines, for the first arm 16, a first front-side end portion 19, at the end of which the first arm is adapted to rotate and translate within the first pivoting portion 11, in the direction moving toward and away from the second pivoting portion 13, and a second temple-side end portion 20, with which the first arm is coupled so as to rotate in the second pivoting portion 13 about a first rotation screw 321 which is screwed to the second pivoting portion.

For the second arm 17, the angle defines a first temple-side end portion 22, at the end of which the second arm is adapted to rotate and translate within the second pivoting portion 13, in the direction moving toward and away from the first pivoting portion 11, and a second front-side end portion 24, with which the second arm is coupled so as to rotate in the first pivoting portion 11 about a second rotation screw 325 which is screwed to the first pivoting portion.

Furthermore, the first and second pivoting portions 11, 13 are C-shaped at the mechanism 15, where they are passed through by the screws 321,325.

By tightening the screws 321 and 325 the portions 13 and 11 are pressed against the arms 16 and 17 and the arms against each other, thus limiting the play between the components.

Operation of the hinge, according to the invention, is the following.

When the eyeglasses are in the configuration for use, the temple 14 is in the position rotated away from the front 12 as shown in Figure 4, and the spring is in the inactive configuration. When the eyeglasses need to be closed, the temple 14 is brought to the front 12 and the mechanism 15 is actuated, producing the combined rotation and translation of the first arm 16 and of the second arm 17, therefore respectively of the first front-side end portion 19 and of the first temple-side end portion 22, toward the pivoting point between the two. During the combined rotation and translation of the second arm 17 the spring is tensioned. At the same time, the tabs 35 slide on the locking element 36 which deforms, causing a displacement of the contoured free end 37. When the tabs 35 arrive at the contour of the free end 37 of the element 36, by virtue of an elastic return, that end returns to the initial position. In this manner a coupling is developed between the second arm 17 and the element 36, which produces a locking that boosts the stability of the temple when closed but can easily be defeated by opening the eyeglasses.

It is evident that the mechanism 15, and the pivoting portions 11 and 13, remain completely hidden inside the front 12 and inside the temple 14 when the eyeglasses are in the configuration for use and therefore with the temple rotated away from the front.

When the eyeglasses are in the closed configuration the mechanism 15 is only partially visible, in its intermediate part between the two components of the eyeglasses.

The two positions of the temple, corresponding to the configuration for use of the eyeglasses and to the inactive configuration, are stable by virtue of the hinge 10. In the first configuration, the spring with its elastic return works against the accidental closure of the eyeglasses. In the inactive configuration, a dead point is reached in the toggle mechanism and a coupling is generated between the tabs of the second arm and the locking element which ensures that the structure locks itself.

Furthermore, the movement in the transition from the inactive configuration to the configuration for use is rapid and "by snap action" by virtue of the effect of the tensioned spring, making the use of the eyeglasses more practical.

In the variation with a compression spring, this ensures that the eyeglasses remain closed. To open the eyeglasses, it is sufficient to defeat the force of the spring.

The second embodiment and the third embodiment are simpler in construction.

In the second embodiment, the transition of the eyeglasses from one configuration to the other results in a click owing to the passage of the undulation of the leaf spring beyond the abutment shoulder or the tooth. The seat makes it possible to stably maintain the configuration for use. The tooth makes it possible to stably maintain the two configurations.

In the third embodiment, the lamina of the spring has an elastic holdback effect during the transition from one configuration to the other and retards the movement.

The fourth embodiment is simpler in construction, since it does away with the presence of an elastic element, and makes it possible to obtain a perfect and stable retardation, while completely eliminating the play between the components.

It should also be noted that the hinge is made up of few parts and it can be installed without making holes on the frame and without using screws, thus considerably improving the aesthetic impact of the final product.

In practice it has been found that the invention fully achieves the intended aim and objects by providing a hinge for eyeglasses that is completely invisible in the configuration for use of the eyeglasses and which enables a stable positioning of the temple, both in the configuration for use and in the closed configuration, thus also improving the practicality of use of the eyeglasses.

## Claims

1. A hinge for eyeglasses, comprising a first pivoting portion (11), to be associated with an end part of a front (12) of eyeglasses, and a second pivoting portion (13), to be associated with an end part of a temple (14) of said eyeglasses, said first and second portions (11, 13) being connected by way of a toggle mechanism (15), **characterized in that** said toggle mechanism (15) comprises a first arm (16) and a second arm (17) which are angled in an intermediate region thereof and between said two pivoting portions (11, 13), in which they are mutually pivoted about a pivot (18), the angle defining:
- for said first arm (16), a first front-side end portion (19), at the end of which said first arm is adapted to rotate and translate within said first pivoting portion (11), in the direction moving toward and away from said second pivoting portion (13), and a second temple-side end portion (20), with which said first arm is coupled so as to rotate in said second pivoting portion (13) about a first rotation pivot (21) which is integral with said second pivoting portion,
- for said second arm (17), a first temple-side end portion (22), at the end of which said second arm is adapted to rotate and translate within said second pivoting portion (13), in the direction moving toward and away from said first pivoting portion (11), and coupled to elastic return means (23; 123; 223), and a second front-side end portion (24), with which said second arm is coupled so as to rotate in said first pivoting portion (11) about a second rotation pivot (25; 325) which is integral with said first pivoting portion.

2. The hinge according to claim 1, **characterized in that** said elastic return means (23) comprise a helical spring which is connected with one end to said first temple-side end portion (22) and with the opposite fixed end (30) to the temple (14) of the eyeglasses.

3. The hinge according to one or more of the preceding claims, **characterized in that** said fixed end (30) of the spring is accommodated within a hollow shank (31) that extends said second pivoting portion (13) and is coupled therein with its said fixed end (30).

4. The hinge according to one or more of the preceding claims, **characterized in that** said spring is coupled with said fixed end (30) to an affixing element (32) which is rendered integral with said hollow shank (31) by virtue of an affixing pin.

5. The hinge according to claim 1, **characterized in that** said first temple-side end portion (22), for said second arm (17), comprises one or more tabs (35), and **in that** said second pivoting portion (13) comprises a locking element (36) which has one end (38) which is integral with said shank (31) and the other end (37) which is free and contoured to be complementary to said one or more tabs (35) and adapted to generate interference with said one or more tabs (35) in the configuration in which the temple is closed.

6. The hinge according to claim 1, **characterized in that** said first arm (16) is adapted to rotate and translate with at least one protrusion (26) of said first front-side end portion (19) in a respective first translation guide channel (27) provided on the internal wall of said first pivoting portion (11) and said second arm (17) is adapted to rotate and translate with at least one protrusion (28) of said first temple-side end portion (22) in a respective second translation guide channel (29) provided on the internal wall of said second pivoting portion (13).

7. The hinge according to claim 1, **characterized in that** each one of said first front-side end portion (19) and said first temple-side end portion (22) are passed through by a respective pin that protrudes on opposite sides of the same portion so as to create, for each one, two respective said protrusions (26, 28) with which they are designed to rotate and translate within respective opposite said translation guide channels (27, 29).

8. The hinge according to claim 1, **characterized in that** said elastic return means are a helical spring (23).

9. The hinge according to claim 1, **characterized in that** said first and second portions (11, 13) can be built completely into said front (12) and in said temple (14) respectively.

10. The hinge (110, 210) according to claim 1, **characterized in that** it is provided with a leaf spring (123, 223) adapted to act on said mechanism (15) for maintaining the stability of the eyeglasses at least in one of either the closed configuration with said temple (14) close to said front (12), and the configuration for use, with said temple (14) rotated away from said front (12).

11. The hinge according to claim 10, **characterized in that** said elastic return means are said leaf spring (123).

12. The hinge according to one or more of the preceding claims, **characterized in that** said leaf spring (123) is connected with one end to said first temple-side end portion (22) and has an undulation (123a) with the crest of which it is adapted to arrange itself in an adapted seat (140) that is present on the internal wall of said second pivoting portion (13), it being adapted to slide with said second arm (17) in said second pivoting portion (13), going past, with snap action, an abutment shoulder (141a) of said seat (140).

13. The hinge according to one or more of the preceding claims, **characterized in that** said leaf spring (123) is connected with one end to said first temple-side end portion (22) and has an undulation (123a) with the crest of which it is adapted to go past, with snap-action, a tooth (141b) that is present on the internal wall of said second pivoting portion (13), it being adapted to slide with said second arm (17) in said second pivoting portion (13).

14. The hinge according to claim 1, **characterized in that** said a first temple-side end portion (22) is cam-shaped, with the cam bending a leaf spring (223), which is adapted to exert a compression in the direction transverse to the direction of translation of said second arm (17), and a second front-side end portion (24), with which said second arm is coupled so as to rotate in said first pivoting portion (11) about a second rotation pivot (25) which is integral with said first pivoting portion.

15. The hinge (310) according to claim 1, **characterized in that** saidsecond rotation pivot is a second rotation screw (325) which is screwed to said first pivoting portion,
said first and second pivoting portions (11, 13) being C-shaped at said mechanism (15), where they are passed through by said screws (321, 325).

## Patentansprüche

1. Ein Scharnier für Brillen, das einen ersten gelenkigen Abschnitt (11), der mit einem Endstück einer Vorderseite (12) einer Brille verbunden werden soll, und einen zweiten gelenkigen Abschnitt (13) umfasst, der mit einem Endstück eines Bügels (14) der Brille verbunden werden soll; wobei der erste und der zweite Abschnitt (11, 13) über einen Kniehebelmechanismus (15) verbunden sind; **dadurch gekennzeichnet, dass** der Kniehebelmechanismus (15) einen ersten Arm (16) und einen zweiten Arm (17) umfasst, die in einem intermediären Bereich desselben und zwischen den beiden gelenkigen Abschnitten (11, 13) winklig angeordnet sind, wobei sie um einen Drehzapfen (18) drehgelenkig miteinander verbunden sind, wobei der Winkel Folgendes bestimmt:
- für den ersten Arm (16), einen ersten vorderen Endabschnitt (19), an dessen Ende der erste Arm ausgebildet ist, um sich zu drehen und innerhalb des ersten gelenkigen Abschnitts (11) eine Translationsbewegung in die Richtung zu dem zweiten gelenkigen Abschnitt (13) hin und von ihm fort durchzuführen; und einen zweiten bügelseitigen Endabschnitt (20), mit welchem der erste Arm gekoppelt ist, um sich in dem zweiten gelenkigen Abschnitt (13) um einen ersten Drehzapfen (21) zu drehen, der integral mit dem zweiten gelenkigen Abschnitt ist,
- für den zweiten Arm (17), einen ersten bügelseitigen Endabschnitt (22), an dessen Ende der zweite Arm ausgebildet ist, um sich zu drehen und innerhalb des zweiten gelenkigen Abschnitts (13) eine Translationsbewegung in die Richtung zu dem ersten gelenkigen Abschnitt (11) hin und von ihm fort durchzuführen; und gekoppelt mit elastischen Rückstellmitteln (23; 123; 223); und einen zweiten vorderen Endabschnitt (24), mit welchem der zweite Arm gekoppelt ist, um sich in dem ersten gelenkigen Abschnitt (11) um einen zweiten Drehzapfen (25; 325) zu drehen, der integral mit dem ersten gelenkigen Abschnitt ist.

2. Das Scharnier gemäß Anspruch 1, **dadurch gekennzeichnet, dass** die elastischen Rückstellmittel (23) eine Spiralfeder umfassen, die an einem Ende mit dem ersten bügelseitigen Endabschnitt (22) und am gegenüberliegenden festen Ende (30) mit dem Bügel (14) der Brille verbunden ist.

3. Das Scharnier gemäß einem oder mehreren der obigen Ansprüche, **dadurch gekennzeichnet, dass** das feste Ende (30) der Feder in einem hohlen Schaft (31) untergebracht ist, der den zweiten gelenkigen Abschnitt (13) verlängert und darin mit seinem festen Ende (30) gekoppelt ist.

4. Das Scharnier gemäß einem oder mehreren der obigen Ansprüche, **dadurch gekennzeichnet, dass** die Feder mit dem festen Ende (30) mit einem Befestigungselement (32) gekoppelt ist, welches über einen Befestigungsstift mit dem hohlen Schaft (31) integral gemacht ist.

5. Das Scharnier gemäß Anspruch 1, **dadurch gekennzeichnet, dass** der erste bügelseitige Endabschnitt (22) für den zweiten Arm (17) einen oder mehrere Vorsprünge (35) umfasst, und dadurch, dass der zweite gelenkige Abschnitt (13) ein Blockierelement (36) umfasst, dessen eines Ende (38) integral mit dem Schaft (31) ist und dessen anderes Ende (37) frei und konturiert ist, um komplementär zu den einen oder mehreren Vorsprüngen (35) zu sein, und ausgebildet, um in der Anordnung, in welcher der Bügel geschlossen ist, Interferenz mit den einen oder mehreren Vorsprüngen (35) herzustellen.

6. Das Scharnier gemäß Anspruch 1, **dadurch gekennzeichnet, dass** der erste Arm (16) ausgebildet ist, um sich mit mindestens einem Vorsprung (26) des ersten vorderen Endabschnitts (19) in einem entsprechenden ersten Translationsführungskanal (27) zu drehen und Translationsbewegungen durchzuführen, der an der Innenwand des ersten gelenkigen Abschnitts (11) angebracht ist, und der zweite Arm (17) ausgebildet ist, um sich mit mindestens einem Vorsprung (28) des ersten bügelseitigen Endabschnitts (22) in einem entsprechenden zweiten Translationsführungskanal (29) zu drehen und Translationsbewegungen durchzuführen, der an der Innenwand des zweiten gelenkigen Abschnitts (13) angebracht ist.

7. Das Scharnier gemäß Anspruch 1, **dadurch gekennzeichnet, dass** sowohl der erste vordere Endabschnitt (19) als auch der erste bügelseitige Endabschnitt (22) von einem entsprechenden Stift durchquert sind, welcher an gegenüberliegenden Seiten desselben Abschnitts herausragt, um so für jeden die entsprechenden Vorsprünge (26, 28) zu erzeugen, mit denen sie dazu bestimmt sind, sich in den jeweiligen gegenüberliegenden Translationsführungskanälen (27, 29) zu drehen und Translationsbewegungen durchzuführen.

8. Das Scharnier gemäß Anspruch 1, **dadurch gekennzeichnet, dass** die elastischen Rückstellmittel eine Spiralfeder (23) sind.

9. Das Scharnier gemäß Anspruch 1, **dadurch gekennzeichnet, dass** der erste und der zweite Abschnitt (11, 13) vollständig in die Vorderseite (12) beziehungsweise in den Bügel (14) eingebaut sein können.

10. Das Scharnier (110, 210) gemäß Anspruch 1, **dadurch gekennzeichnet, dass** es mit einer Blattfeder (123, 223) ausgestattet ist, die ausgebildet ist, um auf den Mechanismus (15) einzuwirken, um die Stabilität der Brille in mindestens einer aus der geschlossenen Anordnung, in der sich der Bügel (14) nahe der Vorderseite (12) befindet, und der Nutzungsanordnung aufrechtzuerhalten, in welcher der Bügel (14) von der Vorderseite (12) weggedreht ist.

11. Das Scharnier gemäß Anspruch 10, **dadurch gekennzeichnet, dass** die elastischen Rückstellmittel die Blattfeder (123) sind.

12. Das Scharnier gemäß einem oder mehreren der obigen Ansprüche, **dadurch gekennzeichnet, dass** die Blattfeder (123) an einem Ende mit dem ersten bügelseitigen Endabschnitt (22) verbunden ist und eine Wellenform (123a) hat, mit deren Scheitelpunkt sie ausgebildet ist, um in einen passenden Sitz (140) einzudringen, der an der Innenwand des zweiten gelenkigen Abschnitts (13) angebracht ist, wobei es ausgebildet ist, um mit dem zweiten Arm (17) in dem zweiten gelenkigen Abschnitt (13) zu gleiten und mit Schnappwirkung eine Widerlagerschulter (141a) des Sitzes (140) zu passieren.

13. Das Scharnier gemäß einem oder mehreren der obigen Ansprüche, **dadurch gekennzeichnet, dass** die Blattfeder (123) an einem Ende mit dem ersten bügelseitigen Endabschnitt (22) verbunden ist und eine Wellenform (123a) hat, mit deren Scheitelpunkt sie ausgebildet ist, um mit Schnappwirkung einen Zahn (141b) zu passieren, der an der Innenwand des zweiten gelenkigen Abschnitts (13) angebracht ist, wobei es ausgebildet ist, um mit dem zweiten Arm (17) in dem zweiten gelenkigen Abschnitt (13) zu gleiten.

14. Das Scharnier gemäß Anspruch 1, **dadurch gekennzeichnet, dass** ein erster bügelseitiger Endabschnitt (22) nockenförmig ist, wobei der Nocken eine Blattfeder (223) biegt, die ausgebildet ist, um eine Kompression in die Richtung quer zur Translationsrichtung des zweiten Arms (17) auszuüben, und ein zweiter vorderer Endabschnitt (24), mit dem der zweite Arm gekoppelt ist, um sich in dem ersten gelenkigen Abschnitt (11) um einen zweiten Drehzapfen (25) zu drehen, der integral mit dem ersten gelenkigen Abschnitt ist.

15. Das Scharnier (310) gemäß Anspruch 1, **dadurch gekennzeichnet, dass** der zweite Drehzapfen eine zweite Rotationsschraube (325) ist, die an dem ersten gelenkigen Abschnitt festgeschraubt ist,
wobei der erste und der zweite gelenkige Abschnitt (11, 13) an dem Mechanismus (15), an dem sie von den Schrauben (321, 325) durchquert sind, C-förmig sind.

## Revendications

1. Charnière pour lunettes, comprenant une première partie pivotante (11), destinée à être associée avec une partie d'extrémité d'un avant (12) de lunettes, et une seconde partie pivotante (13), destinée à être associée avec une partie d'extrémité d'une branche (14) desdites lunettes, lesdites première et seconde parties (11, 13) étant reliées au moyen d'un mécanisme à genouillère (15), **caractérisée en ce que** ledit mécanisme à genouillère (15) comprend un premier bras (16) et un second bras (17) qui forment un angle dans une région intermédiaire de ceux-ci et entre lesdites deux parties pivotantes (11, 13), dans laquelle ils pivotent mutuellement autour d'un pivot (18), l'angle définissant :
pour ledit premier bras (16), une première partie d'extrémité côté avant (19), à l'extrémité de laquelle ledit premier bras est adapté pour tourner et translater dans ladite première partie pivotante (11), dans la direction d'approche et d'éloignement de ladite seconde partie pivotante (13), et une seconde partie d'extrémité côté branche (20), avec laquelle ledit premier bras est couplé de façon à tourner dans ladite seconde partie pivotante (13) autour d'un premier pivot de rotation (21) qui est d'un seul bloc avec ladite seconde partie pivotante,
pour ledit second bras (17), une première partie d'extrémité côté branche (22), à l'extrémité de laquelle ledit second bras est adapté pour tourner et translater dans ladite seconde partie pivotante (13), dans la direction d'approche et d'éloignement de ladite première partie pivotante (11), et couplée à des moyens de rappel élastiques (23; 123; 223), et une seconde partie d'extrémité côté avant (24), avec laquelle ledit second bras est couplé de façon à tourner dans ladite première partie pivotante (11) autour d'un second pivot de rotation (25; 325) qui est d'un seul bloc avec ladite première partie pivotante.

2. Charnière selon la revendication 1, **caractérisée en ce que** lesdits moyens de rappel élastiques (23) comprennent un ressort hélicoïdal qui est relié à une extrémité de ladite première partie d'extrémité côté branche (22) et à l'extrémité fixe (30) opposée à la branche (14) des lunettes.

3. Charnière selon une ou plusieurs des revendications précédentes, **caractérisée en ce que** ladite extrémité fixe (30) du ressort est accueillie dans une tige creuse (31) qui étend ladite seconde partie pivotante (13) et est couplée à l'intérieur avec ladite extrémité fixe (30).

4. Charnière selon une ou plusieurs des revendications précédentes, **caractérisée en ce que** ledit ressort est couplé avec ladite extrémité fixe (30) à un élément de fixation (32) qui est rendu d'un seul bloc avec ladite tige creuse (31) grâce à une goupille de fixation.

5. Charnière selon la revendication 1, **caractérisée en ce que** ladite première partie d'extrémité côté branche (22), pour ledit second bras (17), comprend une ou plusieurs pattes (35), et **en ce que** ladite seconde partie pivotante (13) comprend un élément de blocage (36) qui comporte une extrémité (38) qui est d'un seul bloc avec ladite tige (31) et l'autre extrémité (37) qui est libre et profilée pour être complémentaire desdites une ou plusieurs pattes (35) et adaptée pour générer une interférence avec lesdites une ou plusieurs pattes (35) dans la configuration dans laquelle la branche est fermée.

6. Charnière selon la revendication 1, **caractérisée en ce que** ledit premier bras (16) est adapté pour tourner et translater avec au moins une saillie (26) de ladite première partie d'extrémité côté avant (19) dans un premier canal de guidage en translation (27) respectif placé sur la paroi intérieure de ladite première partie pivotante (11) et ledit second bras (17) est adapté pour tourner et translater avec au moins une saillie (28) de ladite première partie d'extrémité côté branche (22) dans un second canal de guidage en translation (29) respectif placé sur la paroi intérieure de ladite seconde partie pivotante (13).

7. Charnière selon la revendication 1, **caractérisée en ce que** chacune de ladite première partie d'extrémité côté avant (19) et ladite première partie d'extrémité côté branche (22) sont traversées par une goupille respective qui fait saillie sur des côtés opposés de la même partie de façon à créer, pour chacune, deux dites saillies (26, 28) respectives avec lesquelles elles sont conçues pour tourner et translater dans lesdits canaux de guidage en translation (27, 29) opposés respectifs.

8. Charnière selon la revendication 1, **caractérisée en ce que** lesdits moyens de rappel élastiques sont un ressort hélicoïdal (23).

9. Charnière selon la revendication 1, **caractérisée en ce que** lesdites première et seconde parties (11, 13) peuvent être construites entièrement dans ledit avant (12) et dans ladite branche (14) respectivement.

10. Charnière (110, 210) selon la revendication 1, **caractérisée en ce qu'**elle est pourvue d'un ressort lame (123, 223) adapté pour agir sur ledit mécanisme (15) pour maintenir la stabilité des lunettes au moins dans une de soit la configuration fermée avec ladite branche proche dudit avant (12), et la configuration en utilisation, avec ladite branche (14) éloignée en tournant dudit avant (12).

11. Charnière selon la revendication 10, **caractérisée en ce que** lesdits moyens de rappel élastiques sont ledit ressort lame (123).

12. Charnière selon une ou plusieurs des revendications précédentes, **caractérisée en ce que** ledit ressort lame (123) est relié avec une extrémité à ladite première partie d'extrémité côté branche (22) et a une ondulation (123a) avec la crête de laquelle il est adapté pour s'agencer lui-même dans un siège adapté (140) qui est présent sur la paroi intérieure de ladite seconde partie pivotante (13), étant adapté pour coulisser avec ledit second bras (17) dans ladite seconde partie pivotante (13), allant au-delà, avec une action d'emboîtement, d'un épaulement de butée (141a) dudit siège (140).

13. Charnière selon une ou plusieurs des revendications précédentes, **caractérisée en ce que** ledit ressort lame (123) est relié avec une extrémité à ladite première partie d'extrémité côté branche (22) et a une ondulation (123a) avec la crête de laquelle il est adapté pour aller au-delà, avec une action d'emboîtement, d'une dent (141b) qui est présente sur la paroi intérieure de ladite seconde partie pivotante (13), étant adapté pour coulisser avec ledit second bras (17) dans ladite seconde partie pivotante (13).

14. Charnière selon la revendication 1, **caractérisée en ce que** ladite une première partie d'extrémité côté branche (22) est en forme de came, avec la came pliant un ressort lame (223), qui est adapté pour exercer une compression dans la direction transversale à la direction de translation dudit second bras (17), et une seconde partie d'extrémité côté avant (24), avec laquelle ledit second bras est couplé de façon à tourner dans ladite première partie pivotante (11) autour d'un second pivot de rotation (25) qui est d'un seul bloc avec ladite première partie pivotante.

15. Charnière selon la revendication 1, **caractérisée en ce que** ledit second pivot de rotation est une seconde vis de rotation (325) qui est vissée sur ladite première partie pivotante,
lesdites première et seconde parties pivotantes (11, 13) étant en forme de C au niveau dudit mécanisme (15), où elles sont traversées par lesdites vis (321, 325).
